Europäisches Patentamt

European Patent Office

Office européen des brevets

(11) Numéro de publication: **0 135 430**
**B1**

(12) **FASCICULE DE BREVET EUROPEEN**

(45) Date de publication du fascicule du brevet: **18.05.88**

(21) Numéro de dépôt: **84401667.5**

(22) Date de dépôt: **14.08.84**

(51) Int. Cl.⁴: **F 02 K 3/075, F 01 D 17/14**

(54) Dispositif variateur du flux secondaire d'un turboréacteur multiflux.

(30) Priorité: **18.08.83 FR 8313418**

(43) Date de publication de la demande:
**27.03.85 Bulletin 85/13**

(45) Mention de la délivrance du brevet:
**18.05.88 Bulletin 88/20**

(84) Etats contractants désignés:
**DE FR GB IT SE**

(56) Documents cités:
**DE-A-2 917 303**
**FR-A-1 291 561**
**FR-A-1 377 199**
**US-A-3 118 276**
**US-A-3 432 100**
**US-A-3 769 797**

(73) Titulaire: **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur: **Debeneix, Pierre**
**31, route d'Etrelles**
**F-77930 Saint Sauveur Sur Ecole (FR)**
Inventeur: **Tournere, Marcel Joseph**
**35, rue Rottembourg**
**F-75012 Paris (FR)**

(74) Mandataire: **Moinat, François**
**S.N.E.C.M.A. Service des Brevets Boîte Postale 81**
**F-91003 Evry Cédex (FR)**

Courier Press, Leamington Spa, England.

## Description

L'invention concerne un canal secondaire annulaire de turboréacteur multiflux muni d'un dispositif variateur du flux secondaire, ledit dispositif comportant des moyens placés dans ledit canal susceptibles de diminuer la section de passage du flux d'air par modification de leur position.

Dans les turboréacteurs multiflux à canal de réchauffe, le flux secondaire d'air froid doit pouvoir être contrôlé afin d'obtenir un fonctionnement satisfaisant de la réchauffe dans une large plage de conditions subsoniques ou supersoniques de vol. La vitesse relative du flux secondaire doit être contrôlée à sa rencontre avec le flux primaire de manière que le taux de dilution soit optimisé. Un tel réglage peut s'obtenir par contrôle du débit du flux secondaire.

Le FR—A—2 316 443 décrit un variateur du taux de dilution constitué d'un diaphragme placé dans le canal secondaire et susceptible de faire varier le débit du flux secondaire par réduction de la section libre du canal. Le dispositif est constitué d'un certain nombre de volets périphériquement consécutifs. Chacun de ces volets occupe un segment de circonférence et est mobile dans un plan radial du turboréacteur. Les volets sont articulés par une de leurs extrémités à des axes fixes parallèles à l'axe du turboréacteur. L'autre extrémité est entraînée radialement par la tige d'un vérin. Le vérin agit aux extrémités adjacentes de deux volets consécutifs tandis que les autres extrémités des volets s'engrènent sur une des extrémités des autres volets consécutifs. La variation de section du canal résulte de la formation d'une configuration étoilée par saillie dans le canal des extrémités commandées par les vérins.

Dans la position inactive, le dispositif réduit la section de passage du flux et nécessite un surdimensionnement du diamètre du carter secondaire; en outre, les vérins, étant disposés sur le carter extérieur, augmentent l'encombrement hors tout du réacteur.

Le US—A—3 344 606 décrit un dispositif de prélèvement d'air sur un étage de compresseur pour alimenter le canal de réchauffe. Le carter du compresseur concerné comporte des ouvertures débouchant dans un collecteur annulaire relié par des conduits à un autre collecteur entourant la chambre de réchauffe. Chaque ouverture est munie d'un volet qui pivote à une de ses extrémités autour d'un axe tangent au carter, disposé dans un plan radial. L'ouverture ou la fermeture des volets est commandée par un vérin agissant sur un anneau susceptible de se déplacer axialement sur des rampes solidaires des volets.

Le turboréacteur décrit n'est pas du type multiflux et ne comporte pas de canal annulaire secondaire entourant le canal primaire. Ainsi le problème de la diminution de la section libre du canal ne se pose pas, ni l'augmentation de l'encombrement hors tout.

L'extraction de l'air à partir d'un compresseur ne pose pas les mêmes problèmes aérodynamiques que la modification du débit d'un flux d'air permanent dans un canal annulaire.

Par ailleurs, le FR—A—1 377 199 décrit un moteur à turbine à gaz comportant un registre dans un canal secondaire, disposé entre un conduit amont et un conduit de dérivation qui est mis en communication soit avec ledit conduit amont soit, dans une seconde position du registre, avec une arrivée d'air de dérivation.

L'invention se propose de réaliser un canal secondaire muni d'un dispositif variateur du flux secondaire comportant des volets prévus pour présenter une obstruction négligeable à la veine secondaire en position inactive et une compensation au moins partielle de l'effort aérodynamique supporté par le volet lors de son déplacement par une distribution particulière des axes de rotation et du point d'application de la poussée des vérins de commande.

Le canal secondaire selon l'invention, comportant des moyens susceptibles de diminuer la section de passage du flux d'air, est remarquable en ce que lesdits moyens comprennent des volets annulaires régulièrement répartis dans le canal secondaire annulaire, mobiles autour de deux axes fixes disposés de façon à procurer une compensation au moins partielle de l'effort aérodynamique supporté par le volet dans la moitié inférieure ou supérieure du volet et définissant un axe géométrique tangent à un cercle inscrit au canal annulaire secondaire, et des moyens de commande du volet disposés à l'intérieur du canal secondaire agissant selon l'axe de symétrie radial et dans la moitié supérieure ou inférieure du volet, lesdits moyens de commande étant disposés en aval du volet par rapport à la direction du flux d'air secondaire et fixés directement ou indirectement d'une part à une paroi du canal secondaire et d'autre part au volet.

Les explications et figures données ci-après à titre d'exemple permettront de comprendre comment l'invention peut être réalisée.

La figure 1 est une vue partielle et selon un plan radial du turboréacteur d'un exemple de réalisation du dispositif selon l'invention.

La figure 2 est une vue partielle et selon un plan diamétral du turboréacteur du dispositif selon la figure 1.

La figure 3 est une vue partielle et selon un plan radial du turboréacteur d'un deuxième exemple de réalisation du dispositif selon l'invention.

La figure 4 est une vue partielle et selon un plan diamétral du turboréacteur du dispositif selon la figure 3.

La figure 5 est une vue de dessus selon V de la figure 4.

La figure 6 est une vue selon un plan diamétral du turboréacteur d'un dispositif semblable à celui de la précédente forme de réalisation placé dans une zone différente du canal annulaire.

La figure 7 est une vue selon un plan diamétral du turboréacteur d'un dispositif semblable à celui de la deuxième forme de réalisation placé dans une autre zone de canal annulaire.

On a représenté sur les figures une vue partielle des canaux primaire 1 et secondaire 2 d'un turboréacteur. Le canal primaire est situé à la partie inférieure des figures et est séparé du canal secondaire par une paroi 3 dont la surface extérieure constitue au moins partiellement la paroi intérieure du canal secondaire 2. Le canal secondaire est limité extérieurement par une paroi extérieure 4. Comme connu et couramment réalisé, les parois intérieure et extérieure sont constituées par des sections de carters cylindriques ou cylindro-coniques fixées axialement les unes aux autres par des brides 5, 6 solidaires des extrémités des sections.

Le dispositif variateur de flux secondaire, selon l'invention, comporte une pluralité de volets annulaires 7, uniformément répartis dans un plan radial du canal annulaire secondaire 2. Les volets 7 sont mobiles autour d'axes fixes 8, 9 disposés dans la moitié inférieure ou supérieure du volet. Les axes d'un même volet définissent un axe géométrique tangent à un cercle inscrit au canal annulaire secondaire 2. La hauteur du volet est prévue de manière qu'en position active, c'est-à-dire lorsque la surface du volet fait avec la direction du flux d'air secondaire un angle non négligeable les bords circonférentiels 12, 13 sont voisins ou en contact avec les parois intérieure 3 et extérieure 4 du canal secondaire.

Le passage de la position active à la position inactive ou vice versa est obtenu par des moyens de commande 14, par exemple un vérin. Ces moyens sont disposés à l'intérieur du canal 2 entre le volet et une des parois 3 ou 4 du canal, de préférence en aval du volet par rapport à la direction du flux secondaire. L'extrémité libre 15 de la partie mobile du vérin s'articule sur le volet par l'intermédiaire d'un axe 16 parallèle à l'axe défini par les axes fixes 8, 9. Le point d'application de la force exercée par le vérin se trouve approximativement sur l'axe de symétrie radiale à égale distance des bords radiaux du volet et dans la moitié supérieure ou inférieure du volet, moitié opposée à celle portant les axes.

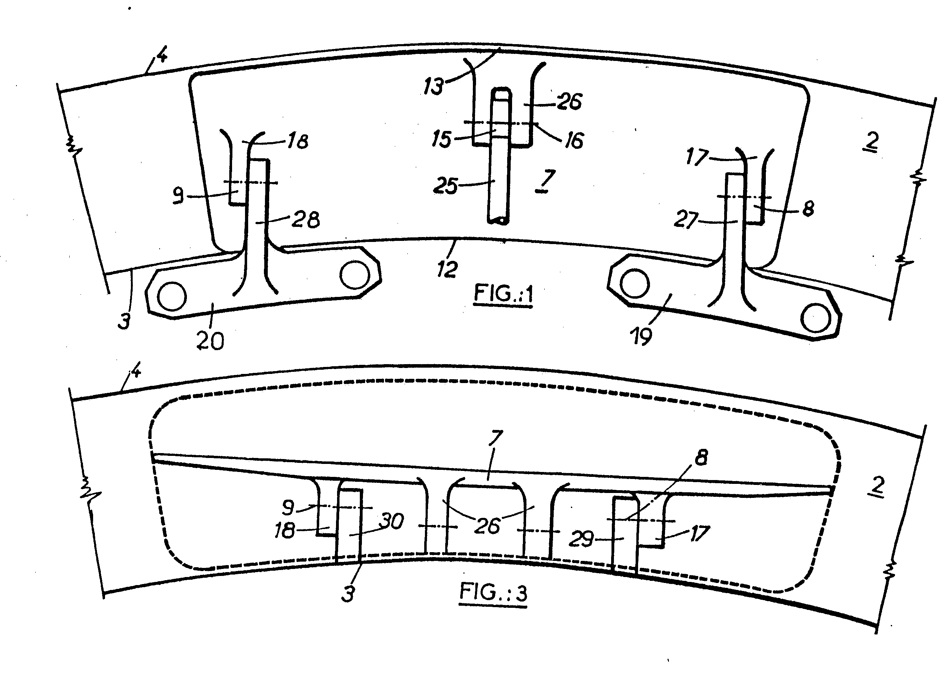

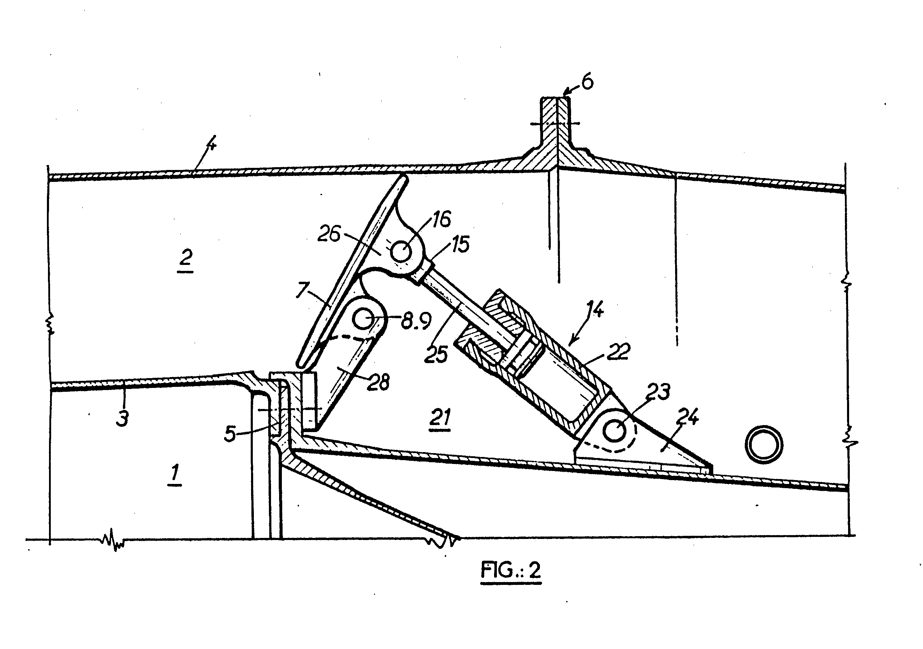

Selon une première forme de réalisation représentée figures 1 et 2, le volet 7 porte deux oreilles 17, 18 munies d'un alésage coopérant avec les axes 8 et 9 maintenus en outre dans des alésages prévus dans deux ferrures 19, 20 munies de pattes radiales 27, 28 fixées sur une bride annulaire radiale 5 solidarisant les parois 3 de deux sections de carter. La section aval de plus faible diamètre détermine par rapport à la section amont une cavité annulaire 21. La zone du canal située à l'aplomb de la bride 5 est dénommée "col de la veine". Selon l'exemple représenté, les axes de rotation se trouvent dans la moitié inférieure du volet. Les moyens de commande 14 sont constitués par un vérin à pression de fluide, ou mécanique.

Dans l'exemple représenté, le corps 22 d'un vérin pneumatique est articulé, par un axe 23, dans un étrier de fixation 24 fixé sur la paroi interne 3 du canal. La tige mobile 25 du vérin est articulée au volet 7 par l'axe 16 maintenu dans les paliers d'une chape 26 solidaire du volet, la chape 26 étant placée sur l'axe de symétrie radiale et dans la moitié supérieure du volet 7.

La figure 2 représente le volet dans la position active, c'est-à-dire le vérin en extension et les bords circonférentiels du volet approximativement en contact avec les parois du canal. Le bord inférieur du volet est selon cet exemple, à l'aplomb du "col de la veine". Les pattes radiales 27, 28 des ferrures portant les axes font, par rapport à un plan radial passant par la bride 5, un angle non nul et détermine une position oblique de la surface du volet par rapport au flux d'air secondaire, ce qui permet de minimiser les turbulences lors du déplacement des volets vers la position inactive.

En position inactive, la tige du vérin est rétractée et la surface du volet est parallèle à la direction du flux. Le volet détermine alors une obstruction minimale du canal, d'autant que le vérin et ses moyens de fixation à la paroi sont au moins partiellement escamotés dans la cavité annulaire 21. L'action perturbatrice des volets sur le flux d'air secondaire est négligeable.

Le fonctionnement des vérins est rendu simultané par interconnexion des canalisations de distribution du fluide de commande sous pression.

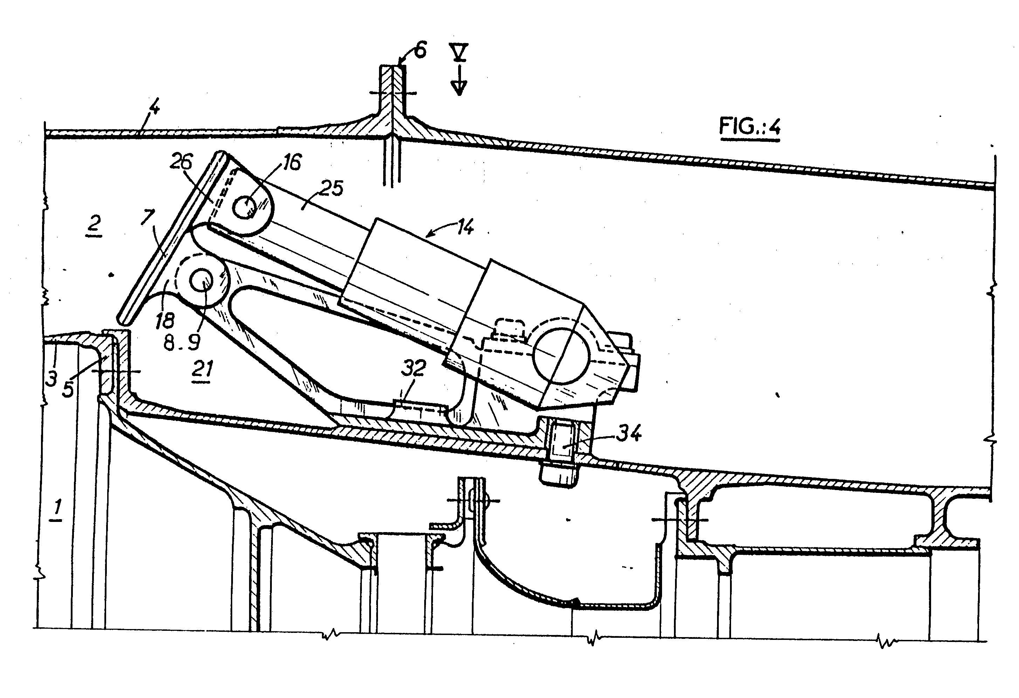

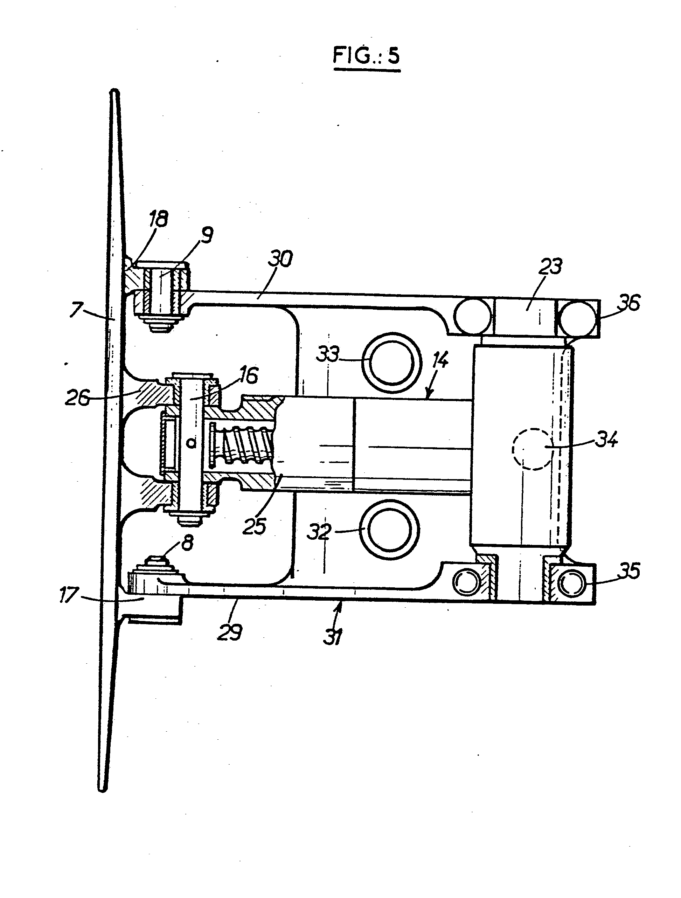

Les figures 3, 4, 5 représentent une deuxième forme de réalisation de l'invention dans laquelle l'ensemble ferrures des axes fixes-étrier de fixation du vérin ont été rendus solidaires de manière à former des ensembles modulaires. La fixation de tels ensembles est simplifiée et permet une maintenance facilitée.

Les axes fixes 8 et 9 de rotation du volet coopèrent d'une part avec les oreilles 17, 18 du volet et d'autre part avec des alésages prévus dans les extrémités amont (par rapport à la direction du flux d'air) des flasques 29, 30 d'une ferrure support 31 en forme de U. Des bossages 32, 33, 34 munis d'un alésage taraudé sont prévus dans la plaque de base de la ferrure 31 et servent à la fixation de l'ensemble volet-vérin sur la paroi du canal secondaire.

L'étrier de fixation du vérin est formé par les extrémités aval des flasques qui portent deux paliers 35, 36 dans lesquels tourillonnent l'axe 23 fixé au corps du vérin 14. L'extrémité de la tige du vérin coopère avec l'axe 16 maintenu dans la chape 26 solidaire du volet. Les axes fixes 8, 9 d'une part, et l'axe 16 d'autre part, sont disposés respectivement dans les moitiés inférieure et supérieure du volet.

Selon l'exemple de réalisation représenté, le vérin est un vérin à vis et est commandé par un flexible non représenté. Les différents vérins sont reliés entre eux par des flexibles entraînés par un moteur.

En position inactive (figure 3), les volets 7 ont leur surface parallèle à la direction du flux d'air et constituent une obstruction négligeable de la veine. En position active (figure 4) les volets sont représentés après pivotement autour de leurs axes 8, 9 et leur surface est venue se placer dans le flux selon une position perpendiculaire ou, préférablement, oblique de manière que le volet obture presque totalement l'espace délimité par les parois 3 et 4.

Selon une réalisation du dispositif conforme à l'invention, la somme des longueurs des volets dans le sens périphérique correspond à environ la moitié de la longueur de circonférence du canal secondaire. Dans les dispositions décrites aux figures 1 et 2 d'une part, et aux figures 3, 4, 5 d'autre part, on remarquera que les axes fixes 8, 9 sont situés approximativement entre la moitié et le tiers inférieur du volet 7. Cette disposition procure une compensation à tout le moins partielle du couple aérodynamique s'exerçant sur les volets et permet l'utilisation de vérins réduits. Préférablement, les axes fixes 8, 9 sont en effet aussi près que possible du milieu du volet pour diminuer le couple, mais doivent être plutôt du côté intérieur du volet pour qu'au cas de rupture ou de décrochage d'un des éléments de commande, le volet se mette automatiquement dans le lit du vent plutôt que dans la position d'obstruction.

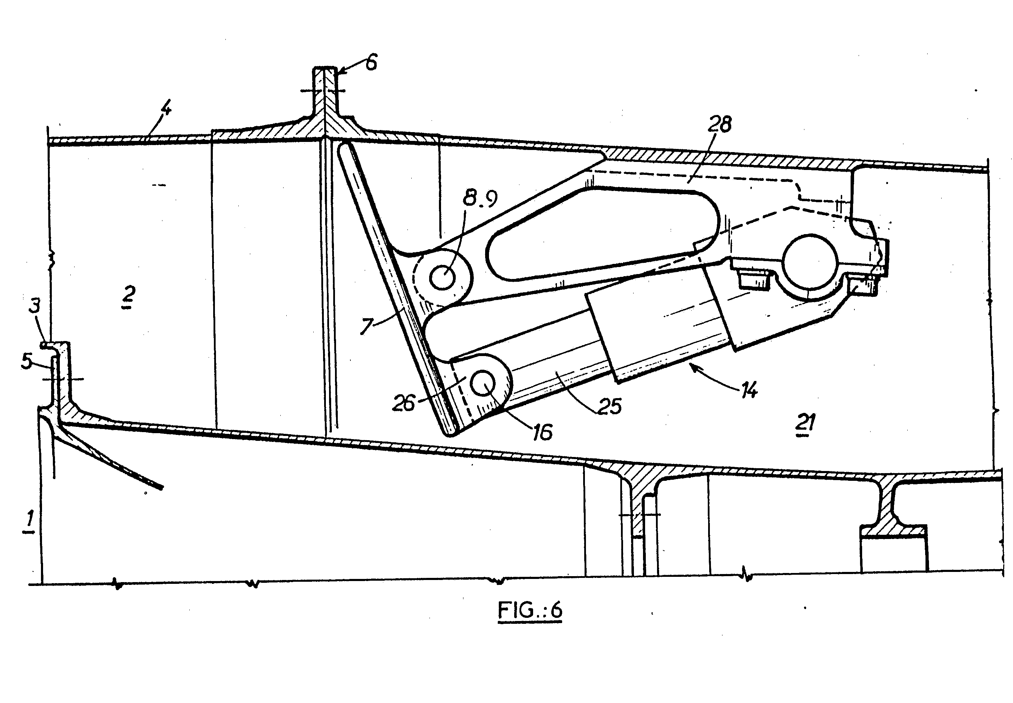

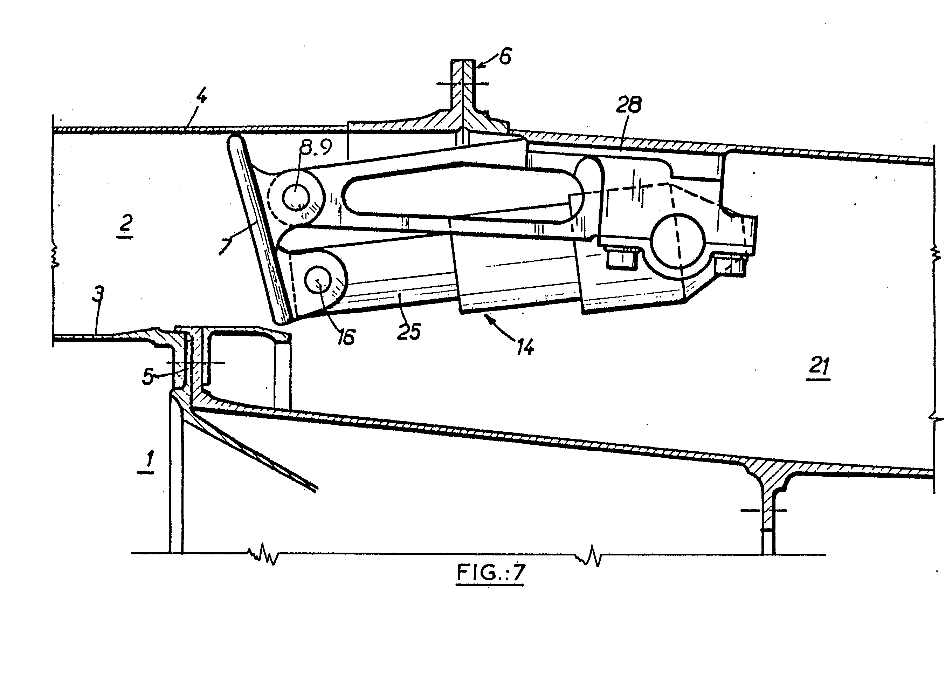

Les figures 6 et 7 montrent des formes de réalisation des ensembles vérin-volet semblables à celles décrites sur les figures 3, 4 et 5, la différence essentielle résidant dans la position qu'ils occupent dans le canal. Par rapport aux exemples des figures 1 à 5, les ensembles volet-vérin sont fixés sur la paroi extérieure 4 du canal et sont situés pour la figure 6 en aval du col 5 de la veine secondaire, et pour la figure 7 à l'aplomb du col 5.

Selon une forme préférée de l'invention, les axes fixes 8, 9 des volets sont situés entre la moitié et le tiers supérieur du volet, afin de compenser, tout au moins en partie, l'effort demandé aux vérins. Cette disposition procure, pour ce mode de réalisation, une compensation tout au moins partielle (comme tous les modes de réalisation des figures 1 à 5) de l'effort aérodynamique s'exerçant sur les volets et permet l'utilisation de vérins de dimensions réduites.

Les principaux avantages que présentent les dispositifs objet de l'invention sont:

— un effacement total ou partiel dans le flux secondaire libérant le maximum de section,

— un mode de fixation libérant l'espace extérieur au moteur et permettant un encombrement moteur réduit,

— une forme modulaire compacte constituée par le volet et sa commande facilitant l'accès et la maintenance.

**Revendications**

1. Canal secondaire annulaire de turboréacteur multiflux muni d'un dispositif variateur du flux secondaire comportant des moyens placés dans ledit canal susceptibles de diminuer la section de passage du flux d'air par modification de leur position, caractérisé en ce que lesdits moyens comprennent des volets annulaires (7) régulièrement répartis dans le canal secondaire annulaire (2), mobiles autour de deux axes fixes (8, 9) disposés de façon à procurer une compensation au moins partielle de l'effort aerodynamique sup- porté par le volet dans la moitié inférieure ou supérieure du volet et définissant un axe géométrique tangent à un cercle inscrit au canal annulaire secondaire, et des moyens de commande (14) du volet disposés à l'intérieur du canal secondaire agissant selon l'axe de symétrie radial et dans la moitié supérieure ou inférieure du volet, opposée à la moitié où sont disposés les axes fixes (8, 9), lesdits moyens de commande étant disposés en aval du volet par rapport à la direction du flux d'air secondaire et fixés directement ou indirectement d'une part à une paroi du canal secondaire et d'autre part au volet.

2. Canal secondaire selon la revendication 1, caractérisé en ce que les volets (7) portent, d'une part, deux oreilles (17, 18) munies d'alésages coopérant avec les axes fixes (8, 9) lesdits axes étant maintenus dans des alésages prévus dans des ferrures (19, 20) fixées sur la paroi intérieure (3) du canal secondaire et, d'autre part, une chape (26) prévue sur l'axe de symétrie radial et dans la moitié opposée à celle contenant les oreilles, coopérant avec les moyens de commande (14).

3. Canal secondaire selon la revendication 2, caractérisé en ce que les moyens de commande (14) comportent une partie mobile (25) coopérant par un axe (16) avec la chape (26) du volet et une partie fixe (22) munie d'un axe (23) mobile dans un étrier de fixation (24) fixé à une paroi du canal secondaire.

4. Canal secondaire selon la revendication 3, caractérisé en ce que les ferrures des axes fixes et l'étrier de fixation sont constitués par une ferrure support (31) en forme de U comportant deux flasques (29, 30) portant à ses extrémités les paliers et alésages pour les axes fixes (8, 9) et pour l'axe (23) de la partie fixe (22) des moyens de commande (14) et une plaque de base par laquelle la ferrure support est fixée sur une paroi du canal annulaire secondaire.

5. Canal secondaire selon la revendication 1, pour un canal annulaire secondaire présentant un col de veine caractérisé en ce que les volets dans la position active ont un bord à l'aplomb du col de veine (5).

6. Canal secondaire selon la revendication 1, pour un canal annulaire secondaire présentant un col de veine, caractérisé en ce que les volets dans la position active sont en aval du col de veine (5) par rapport au flux d'air secondaire.

7. Canal secondaire selon l'une des revendications 1 à 6, caractérisé en ce que les axes fixes (8, 9) du volet sont disposés entre la moitié et le tiers de la hauteur du canal secondaire lorsque le volet est en position active, en partant de l'intérieur lorsque le dispositif est fixé sur la paroi intérieure (3) du canal secondaire.

8. Canal secondaire selon l'une des revendications 1 à 6, caractérisé en ce que les axes fixes (8, 9) du volet sont disposés entre la moitié et le tiers de la hauteur du canal secondaire lorsque le volet est en position active, en partant de l'extérieur lorsque le dispositif est fixé sur la paroi extérieure (4) du canal secondaire.

9. Canal secondaire selon la revendication 7, caractérisé en ce que l'axe (16) d'articulation des moyens de commande sur le volet est environ aux deux tiers de la hauteur du canal secondaire lorsque le volet est en position active, en partant de l'intérieur du canal lorsque le dispositif est fixé sur la paroi intérieure (3) du canal secondaire.

10. Canal secondaire selon la revendication 7, caractérisé en ce que l'axe (16) d'articulation des moyens de commande sur le volet est environ aux deux tiers de la hauteur du canal secondaire lorsque le volet est en position active, an partant de l'extérieur du canal lorsque le dispositif est fixé sur la paroi extérieure (4) du canal secondaire.

## Patentansprüche

1. Ringförmiger Sekundärkreis für ein Mehrkreis-Turbinentriebwerk mit einer Vorrichtung zur Variation der Sekundärströmung

mit in dem Kreis angeordneten Mitteln, durch deren Positionsänderung der Durchgansquerschnitt der Luftströmung verringerbar ist, dadurch gekennzeichnet,

daß diese Mittel gleichmäßig in dem ringförmigen Sekundärkreis (2) verteilte ringförmige Klappen (7) umfassen, die um zwei feste Achsen (8, 9) bewegbar sind, welche in der unteren oder oberen Hälfte der Klappe (7) derart angeordnet sind, daß die auf die Klappe (7) einwirkende aerodynamische Beanspruchung zumindest teilweise kompensiert wird, wobei diese Achsen (8, 9) eine geometrische Linie bestimmen, die einen in den ringförmigen Sekundärkreis eingeschriebenen Kreis tangiert, und

daß im Innern des Sekundärkreises in der oberen oder unteren Hälfte der Klappe, die der Hälfte, in der sich die festen Achsen (8, 9) befinden, entgegengesetzt ist, Steuermittel zur Betätigung der Klappen angeordnet sind, die längs der radialen Symmetrieachse wirken und die in bezug auf die Richtung der sekundären Luftströmung stromabwärts der Klappen angeordnet sind und direkt oder indirekt einerseits an einer Wandung des Sekundärkreises und andererseits an der Klappe befestigt sind.

2. Sekundärkreis nach Anspruch 1, dadurch gekennzeichnet, daß die Klappen (7) einerseits zwei Ösen (17, 18) mit Bohrungen tragen, die mit den festen Achsen (8, 9) zusammenwirken, wobei die festen Achsen in Bohrungen gehalten sind, die in an der Innenwandung (3) des Sekundärkreises befestigten Beschlagteilen (9, 20) ausgebildet sind, und daß die Klappen andererseits ein mit den Steuermitteln (14) zusammenwirkendes Gabelgelenk (26) tragen, das sich auf der radialen Symmetrieachse in der Hälfte befindet, die der die Ösen tragenden Hälfte entgegengesetzt ist.

3. Sekundärkreis nach Anspruch 2, dadurch gekennzeichnet, daß die Steuermittel (14) ein bewegliches Teil (25) aufweist, das über eine Achse (16) mit dem Gabelgelenk (26) der Klappe zusammenwirkt, sowie ein festes Teil (22), das mit einer Achse (23) ausgestattet ist, die in einem an einer Wandung des Sekundärkreises fixierten Befestigungsbügel (24) bewegbar ist.

4. Sekundärkreis nach Anspruch 3, dadurch gekennzeichnet, daß die Beschlagteile der festen Achsen und der Befestigungsbügel von einem U-förmigen Lagerteil (31) gebildet sind, das zwei Flansche (29, 30) aufweist, die in ihren Endbereichen die Lager und Bohrungen für die festen Achsen (8, 9) und für die Achse (23) des festen Teils (22) der Steuermittel (14) tragen, sowie eine Basisplatte, über die das Lagerteil (31) an einer Wandung des ringförmigen Sekundärkreises befestigt ist.

5. Sekundärkreis nach Anspruch 1 für einen ringförmigen Sekundärkreis mit einer Strömungskanalschulter, dadurch gekennzeichnet, daß die Klappen in ihrer aktiven Stellung mit einem Rand lotrecht zu der Strömungskanalschulter (5) stehen.

6. Sekundärkreis nach Anspruch 1 für einen ringförmigen Sekundärkreis mit einer Strömungskanalschulter, dadurch gekennzeichnet, daß die Klappen sich in ihrer aktiven Stellung, bezogen auf die sekundäre Luftströmung, stromabwärts der Strömungskanalschulter (5) befinden.

7. Sekundärkreis nach einem der Ansprüche 1 bis 6, dadurch gekennzeichnet, daß die festen Achsen (8, 9) sich bei aktiver Stellung der Klappe, von der Innenseite ausgehend, im Bereich zwischen der Hälfte und einem Drittel der Höhe des Sekundärkreises befindet, wenn die Vorrichtung an der Innenwandung (3) des Sekundärkreises befestigt ist.

8. Sekundärkreis nach einem der Ansprüche 1 bis 6, dadurch gekennzeichnet, daß die festen Achsen (8, 9) sich bei aktiver Stellung der Klappe, von der Außenseite ausgehend, im Bereich zwischen der Hälfte und einem Drittel der Höhe des Sekundärkreises befinden, wenn die Vorrichtung an der Außenwandung (4) des Sekundärkreises befestigt ist.

9. Sekundärkreis nach Anspruch 7, dadurch gekennzeichnet, daß die Gelenkachse (16) der Steuermittel an der Klappe sich, von der Innenseite ausgehend, auf etwa zwei Dritteln der Höhe des Sekundärkreises befindet, wenn die Klappe ihre aktive Stellung einnimmt und die Vorrichtung an der Innenwandung (3) des Sekundärkreises befestigt ist.

10. Sekundärkreis nach Anspruch 7, dadurch gekennzeichnet, daß die Gelenkachse (16) der Steuermittel an der Klappe sich, von der Außenseite ausgehend, auf etwa zwei Dritteln der Höhe des Sekundärkreises befindet, wenn die Klappe ihre aktive Stellung einnimmt und die Vorrichtung an der Außenwandung (4) des Sekundärkreises befestigt ist.

## Claims

1. Annular bypass duct of a multiflow jet engine provided with a device for varying the bypass flow, the device consisting of means placed in the said duct and capable of reducing the air flow cross-section by modification of their position, characterized in that the said means include annular flaps (7) evenly distributed in the annular bypass duct (2), movable about two fixed pins (8, 9) located in such a manner as to produce at least partial counterbalancing of the aerodynamic force carried by the flap in the lower or upper half of the flap and defining a geometric axis tangential to a circle inscribed in the annular bypass duct, and control means (14) for the flap which are located at the interior of the bypass duct acting along the radial axis of symmetry and in the upper or lower half of the flap opposite to the half where the fixed pins (8, 9) are located, the said control means being located downstream of the flap with respect to the direction of the bypass airflow and being fixed directly or indirectly to a wall of the bypass duct, on the one hand, and to the flap, on the other.

2. Bypass duct according to Claim 1, characterized in that the flaps (7) have, on the one hand, two lugs (17, 18) provided with bores interacting with the fixed pins (8, 9), the said pins being held in bores provided in fittings (19, 20) fixed to the inner wall (3) of the bypass duct and, on the other hand, a fork (26) provided on the radial axis of symmetry and in the half opposite to that containing the lugs, interacting with the control means (14).

3. Bypass duct according to Claim 2, characterized in that the control means (14) consist of a moving part (25) interacting by means of a pin (16) with the fork (26) of the flap and a fixed part (22) provided with a pin (23) movable in a fastening yoke (24) fixed to a wall of the bypass duct.

4. Bypass duct according to Claim 3, characterized in that the fittings of the fixed pins and the fastening yoke are made up of a supporting fitting (31) in the shape of a U with two end plates (29, 30) carrying at its extremities the bearings and bores for the fixed pins (8, 9) and for the pin (23) of the fixed part (22) of the control means (14) and a base plate by which the support fitting is fixed on one wall of the annular bypass duct.

5. Bypass duct according to Claim 1, for an annular bypass duct having a throat, characterized in that the flaps in the active position have an edge in line with the throat (5).

6. Bypass duct according to Claim 1, for an annular bypass duct having a throat, characterized in that the flaps in the active position are downstream of the throat (5) relative to the bypass airflow.

7. Bypass duct according to one of Claims 1 to 6, characterized in that the fixed pins (8, 9) of the flap are located between a half and a third of the height of the bypass duct when the flap is in the active position, starting from the inside when the device is fixed on the inner wall (3) of the bypass duct.

8. Bypass duct according to one of Claims 1 to 6, characterized in that the fixed pins (8, 9) of the flap are located between a half and a third of the height of the bypass duct when the flap is in the active position, starting from the outside when the device is fixed on the outer wall (4) of the bypass duct.

9. Bypass duct according to Claim 7, characterized in that the articulation pin (16) of the control means on the flap is at approximately two thirds of the height of the bypass duct when the flap is in the active position, starting from the inside of the duct when the device is fixed on the inner wall (3) of the bypass duct.

10. Bypass duct according to Claim 7, characterized in that the articulation pin (16) of the control means on the flap is at approximately two thirds of the height of the bypass duct when the flap is in the active position, starting from the outside of the duct when the device is fixed on the outer wall (4) of the bypass duct.

FIG.:1

FIG.:3

0 135 430

FIG.: 2

FIG.:4

0 135 430

0 135 430

## FIG.: 5

4

FIG.:6

FIG.:7

0 135 430